# EUROPEAN PATENT APPLICATION

(11) **EP 4 439 733 A1**
(43) Date of publication of application: **02.10.2024**
(21) Application number: 22960426.9
(22) Date of filing: 30.09.2022
(51) Int. Cl.: H01M 4/62, H01M 4/38

(54) **SILICON-BASED COMPOSITE MATERIAL AND PREPARATION METHOD THEREFOR, NEGATIVE ELECTRODE MATERIAL, AND LITHIUM-ION BATTERY**

(71) Applicant: Hefei Gotion Battery Materials Co., Ltd., Hefei, Anhui 230000 (CN)
(72) Inventor: RAO, Yuanyuan, Hefei, Anhui 230000 (CN); CHENG, Cheng, Hefei, Anhui 230000 (CN); XU, Mao, Hefei, Anhui 230000 (CN); WANG, Zhiquan, Hefei, Anhui 230000 (CN)
(74) Representative: Hindles Limited
(86) International application number: PCT/CN2022/123606
(87) International publication number: WO 2024/065818

(57) **Abstract**

The present disclosure provides a silicon-based composite and a preparation method thereof, an anode material, and a lithium ion battery. The silicon-based composite includes a ferro-silicon alloy core layer, a first coating layer, and a second coating layer, with the first coating layer being coated on the outer surface of the ferro-silicon alloy core layer, and the second coating layer being coated on the outer surface of the first coating layer away from the ferro-silicon alloy core layer; wherein the material of the first coating layer includes carbon and the material of the second coating layer includes an oxide. The present application uses ferro-silicon alloy as the core layer, which can provide a buffer matrix to alleviate the volume change of silicon. Meanwhile, a first coating layer and a second coating layer are sequentially arranged on the outer surface of the core layer in the present disclosure. In this way, the present application can further significantly improve the structural stability of the silicon-based composite while ensuring that the battery meets the conventional electrochemical performance requirements of a battery (such as capacity performance and first charge-discharge efficiency), thereby improving the cycle stability of the battery.

## Description

### Technical Field

The present disclosure relates to the technical field of lithium ion batteries, specifically to a silicon-based composite and a preparation method thereof, an anode material, and a lithium ion battery.

### Background

In recent years, with the rapid development of the new energy field, automobiles and 3C electronic products have increasingly high requirements for the energy density and cycle life of lithium ion batteries. The electrode material of lithium ion batteries is a key factor determining battery performance, and the anode material, inter alia, plays a crucial role. At present, most of the commercialized anode materials of lithium ion batteries are graphite, with a theoretical capacity of only 372 mAh/g, which cannot meet the growing demand for energy density. There is an urgent need for the development of anode materials having higher energy density. Silicon material is considered as the most promising anode material of lithium ion batteries due to its high theoretical capacity of 4200 mAh/g, however, the rapid decline in electrical performance caused by the volume expansion of silicon during lithium intercalation limits its commercial application.

In view of the above, a large amount of modifications has been carried out on silicon-based materials both at home and abroad, with the main research methods being the nanometerization, compounding, and silico-oxygen compounding of silicon. In addition, introducing a metal compound as a second phase into silicon materials is an effective method to compound silicon with metals, forming a Si-M alloy system. In the structure of this material, silicon is dispersed in the alloy phase system, and the good ductility and conductivity of the alloy phase enhance the electrical performance of silicon materials. Ductility can be used to buffer the volume expansion effect of silicon matrix, and the conductivity can improve the ion migration rate, giving full play to the capacity. Ferrosilicon alloy material is a novel silicon-based anode material that conforms to such characteristics, the FeSix inside the material plays a buffering and conductivity enhancing role, so that it has better electrochemical performance compared with pure silicon materials, but still has a certain volume expansion effect, which leads to serious performance degradation and cannot meet practical use requirements.

At present, the main modification method for ferrosilicon alloy anode materials is carbon coating, which can limit expansion to some extent. However, the carbon shell of the ferrosilicon material modified solely by carbon coating is difficult to maintain structural stability for a long time, and will still crack and peel off after multiple cycles, leading to rapid capacity fading. Therefore, it is necessary to provide a new silicon-based composite that can effectively improve the above problems.

### Summary

The main object of the present disclosure is to provide a silicon-based composite and a preparation method thereof, an anode material, and a lithium ion battery, in order to solve the problems of poor cycle stability of battery caused by poor structural stability of silicon-based composite in the prior art, etc.

In order to achieve the above object, according to one aspect of the present disclosure, a silicon-based composite is provided, which includes: a ferro-silicon alloy core layer; a first coating layer coated on the outer surface of the ferro-silicon alloy core layer; and a second coating layer coated on the outer surface of the first coating layer away from the ferro-silicon alloy core layer; wherein the material of the first coating layer includes carbon and the material of the second coating layer includes an oxide.

Further, the second coating layer is provided with a plurality of through-holes; preferably, the radial width of the through-hole is 50 nm to 800 nm, more preferably 50 nm to 150 nm; preferably, the porosity of the second coating layer is 5% to 20%; and preferably, the specific surface area of the second coating layer is 0.5 m²/g to 2 m²/g.

Further, the oxide is selected from one or more of diboron trioxide, phosphorus pentoxide, arsenic trioxide, or vanadium pentoxide.

Further, the ferro-silicon alloy core layer is in powdery form, and preferably the average particle size of the ferro-silicon alloy core layer is 0.5 µm to 2.5 µm; preferably, the weight content of the iron element in the ferro-silicon alloy core layer is 5 wt% to 15 wt%; preferably, the thickness of the first coating layer is 50 nm to 150 nm, more preferably 50 nm to 80 nm; and preferably, the thickness of the second coating layer is 10 nm to 100 nm, more preferably 50 nm to 80 nm.

In order to achieve the above object, according to one aspect of the present disclosure, a preparation method of the aforementioned silicon-based composite is provided, which includes the following steps: step S1, providing a ferro-silicon alloy core layer; and step S2, coating a first coating layer on the outer surface of the ferro-silicon alloy core layer, and coating a second coating layer on the outer surface of the first coating layer away from the ferro-silicon alloy core layer, thereby forming the silicon-based composite.

Further, step S1 includes: ball milling and mixing the ferro-silicon alloy and a ball milling medium to obtain a first slurry containing the ferro-silicon alloy core layer; preferably, the ball to powder ratio during the ball milling process is 16-20:1; preferably, the raw materials in the ball milling process also comprise a dispersant, more preferably the dispersant is selected from one or more of citric acid, sodium tripolyphosphate, or sodium metasilicate; and preferably, the ball milling medium is anhydrous ethanol and/or water.

Further, step S2 includes: step S21, mixing the first slurry and the carbon source under stirring to obtain a second slurry; step S22, drying the second slurry and then subjecting same to a first heat treatment in an inert gas atmosphere to obtain a first heat treatment product; step S23, mixing the first heat treatment product with an oxide, and then performing a second heat treatment in an inert gas atmosphere to obtain the silicon-based composite; wherein, the carbon source comprises a first carbon source and a second carbon source; the thermal decomposition temperature of the first carbon source is less than that of the second carbon source; the treatment temperature of the first heat treatment is greater than or equal to the thermal decomposition temperature of the first carbon source; the treatment temperature of the second heat treatment is greater than or equal to the thermal decomposition temperature of the second carbon source, and the treatment temperature of the second heat treatment is greater than or equal to the melting point of the oxide; and preferably, the difference between the thermal decomposition temperature of the second carbon source and the thermal decomposition temperature of the first carbon source is between 450°Cand 550°C.

Further, the first carbon source is one or more of asphalt, carboxymethyl cellulose, glucose, polyethylene glycol, or potato starch; preferably, the second carbon source is one or more of phenolic resin, polyimide resin, or bismaleimide resin; preferably, in the carbon source, the weight ratio of the first carbon source to the second carbon source is 4-8:1; preferably, the dosage of the carbon source is 30% to 45% by weight of the ferro-silicon alloy layer; preferably, the oxide is in powdery form, and the average particle size of the oxide is 50 nm to 500 mm, more preferably 50 nm to 100 nm; preferably, the dosage of the oxide is 30% to 80% by weight of the carbon source; preferably, the stirring is carried out under vacuum conditions at a stirring speed of 800 r/min to 2000 r/min; preferably, the treatment time of the first heat treatment is 1 h to 6 h; and preferably, the treatment time of the second heat treatment is 1 h to 9 h.

Further, when the first carbon source is asphalt and the oxide is diboron trioxide, the treatment temperature of the first heat treatment is 350°C to 450°C, and the treatment temperature of the second heat treatment is 800°C to 900°C; or, when the first carbon source is glucose and the oxide is phosphorus pentoxide, the treatment temperature of the first heat treatment is 250°C to 500°C, and the treatment temperature of the second heat treatment is 600°C to 1000°C; or, when the first carbon source is carboxymethyl cellulose and the oxide is vanadium pentoxide, the treatment temperature of the first heat treatment is 200°C to 300°C, and the treatment temperature of the second heat treatment is 600°C to 900°C.

According to another aspect of the present disclosure, an anode material is provided, which comprises the aforementioned silicon-based composite or the silicon-based composite prepared by the aforementioned preparation method.

According to another aspect of the present disclosure, a lithium ion battery is provided, which has the aforementioned anode material.

The present disclosure uses ferro-silicon alloy as the core layer, and the FeSiₓ phase inner core can provide a buffer matrix to alleviate the volume change of silicon. Meanwhile, in the present disclosure, a first coating layer (with carbon included in the material) is provided on the outer surface of the core layer, and a second coating layer (with oxide included in the material) is coated on the outer surface of the first coating layer. In this way, the present application can further significantly improve the structural stability of the silicon-based composite while ensuring that the battery meets the conventional electrochemical performance of a battery (such as capacity performance and first charge-discharge efficiency), thereby improving the cycle stability of the battery, and enabling the battery to have superior capacity retention rate.

### Brief Description of the Drawings

The accompanying drawings of the description, which form a part of the application, are used to provide a further understanding of the disclosure. The illustrative embodiments and their descriptions of the disclosure are used to explain the disclosure, and do not constitute an improper limitation thereto. In the accompanying drawings:
Figure 1 shows the Scanning electron microscope (SEM) image of the silicon-based composite in Example 2 of the present disclosure (10 µm);
Figure 2 shows the Scanning electron microscope (SEM) image of the silicon-based composite in Example 2 of the present disclosure (1 µm); and
Figure 3 shows a comparison diagram of the discharge cycle curves of batteries between Example 1 and Comparative example 2 of the present disclosure.

### Detailed Description of the Embodiments

It should be noted that the examples and features in the examples in the present application can be combined with each other without conflicting. The present disclosure will be described in detail below with reference to the drawings and in combination with examples.

As described in the background section of the present disclosure, the silicon-based composite in the prior art has problems such as poor cycle stability of battery caused by poor structural stability, etc. To solve this problem, the present disclosure provides a silicon-based composite, which includes a ferro-silicon alloy core layer, a first coating layer, and a second coating layer, with the first coating layer being coated on the outer surface of the ferro-silicon alloy core layer, and the second coating layer being coated on the outer surface of the first coating layer away from the ferro-silicon alloy core layer; wherein the material of the first coating layer includes carbon and the material of the second coating layer includes an oxide.

The present disclosure uses ferro-silicon alloy as the core layer, and the FeSiₓ phase inner core can provide a buffer matrix to alleviate the volume change of silicon. Meanwhile, in the present disclosure, a first coating layer (with carbon included in the material) is provided on the outer surface of the core layer, and a second coating layer (with oxide included in the material) is coated on the outer surface of the first coating layer. In this way, the present application can further significantly improve the structural stability of the silicon-based composite while ensuring that the battery meets the conventional electrochemical performance of a battery (such as capacity performance and first charge-discharge efficiency), thereby improving the cycle stability of the battery, and enabling the battery to have superior capacity retention rate. Wherein, the material of the aforementioned first coating layer includes carbon, which as an intermediate layer can not only further improve the conductivity of the material, but also provide a buffer matrix for the ferro-silicon alloy core layer to further alleviate the volume change of the ferro-silicon alloy core layer, thereby improving both the electrical performance and cycle stability of the battery. The material of the aforementioned second coating layer is selected as oxide, which has higher mechanical properties and can effectively avoid the phenomenon of breakage and collapse of silicon-based composite, thereby further improving the structural stability of the silicon-based composite and thus mitigating the negative impact in the subsequent practical applications due to volume change, so that the cycle stability of battery can be greatly improved.

Further preferably, the inventors of the present disclosure also found in the process of designing the above-mentioned double-layer coating structure that although the oxide coating layer can effectively improve the structural stability of the material, it can also lead to a slight decrease in the electrochemical performance of the material (such as capacity performance and first charge-discharge efficiency). Therefore, in a preferred embodiment, the present disclosure further provides a plurality of through-holes in the second coating layer. This through-hole structure is conducive to the immersion of electrolyte, enhancing the contact between silicon iron/carbon and electrolyte, and providing a transport channel for lithium ions, so that the ion conductivity of the material is enhanced, thereby improving the electrochemical performance of the battery, and thus allowing the battery to take into account both the excellent electrochemical performance and the cycle stability.

Specifically, firstly, the present disclosure uses ferro-silicon material as the core layer, and the internal FeSiₓ phase inner core provided a buffer matrix to alleviate the volume change of silicon. Secondly, using carbon material as the first coating layer can enhance the conductivity of the material, maintain the structural stability, forming a conductive contact. Thirdly, an oxide is used as the second coating layer, and the second coating layer has a through-hole structure, which can improve the structural stability of the material and at the same time further provide a transport channel for the intercalation and de-intercalation of lithium ions. Based on the synergistic effect of the above-mentioned triple modification, the silicon-based composite of the present disclosure can simultaneously balance excellent electrochemical performance and cycle stability. Preferably, the oxide is selected from one or more of diboron trioxide, phosphorus pentoxide, arsenic trioxide, or vanadium pentoxide. The radial width of the through-hole in the second coating layer is 50 nm to 800 nm (more preferably 50 nm to 150 nm, for example 50 nm, 55 nm, 58 nm, 59 nm, 60 nm, 70 nm, 80 nm, 90 nm, 100 nm, 110 nm, 120 nm, 130 nm, 140 nm or 150 nm), the porosity of the second coating layer is 5% to 20% (for example 5%, 6%, 12%, 15%, 18% or 20%), and the specific surface area is 0.5 m²/g to 2 m²/g (for example 0.8 m²/g, 0.9 m²/g, 1.0 m²/g, 1.1 m²/g, 1.2 m²/g, 1.3 m²/g, 1.5 m²/g, 1.8 m²/g or 2.0 m²/g).

In order to further improve the structural stability of the material, in a preferred embodiment, the content of iron in the ferro-silicon alloy is 5 wt% to 15 wt% (for example 5 wt%, 10 wt%, or 15 wt%). Preferably, the ferro-silicon alloy core layer is in powdery form, and the average particle size of the ferro-silicon alloy core layer is 0.5 µm to 2.5 µm (for example 0.5 µm, 1 µm, 1.5 µm, 2 µm or 2.5 µm). On this basis, the internal stress of the material can be effectively reduced to avoid the phenomenon of expansion and pulverization caused by excessive particle size. In order to further balance the uniformity of the above excellent performance of the material, it is preferred that the thickness of the first coating layer is 50 nm to 150 nm (more preferably 50 nm to 80 nm, for example 50 nm, 60 nm, 65 nm, 70 nm, 77 nm, 79 nm or 80 nm), and the thickness of the second coating layer is 10 nm to 100 nm (more preferably 50 nm to 80 nm, for example 75 nm, 76 nm, 77 nm, 78 nm or 80 nm).

The present disclosure also provides a preparation method of the aforementioned silicon-based composite, which includes the following steps: step S1, providing a ferro-silicon alloy core layer; and step S2, coating a first coating layer on the outer surface of the ferro-silicon alloy core layer, and coating a second coating layer on the outer surface of the first coating layer away from the ferro-silicon alloy core layer, thereby forming the silicon-based composite.

The present disclosure uses ferro-silicon alloy as the core layer, and the internal FeSiₓ phase inner core can provide a buffer matrix to alleviate the volume change of silicon. Meanwhile, in the present disclosure, a first coating layer (with carbon included in the material) is provided on the outer surface of the core layer, and a second coating layer (with oxide included in the material) is coated on the outer surface of the first coating layer. In this way, the structural stability of the material and the cycle stability of the battery can be further greatly improved. On the one hand, the first coating layer serves as an intermediate layer, which can function to improve the conductivity of the material and further provide buffering for the ferro-silicon alloy core layer. On the other hand, the material of the second coating layer is selected as oxide, which has higher mechanical properties and can effectively avoid the phenomenon of breakage and collapse of silicon-based composite, thereby ensuring its structural stability and thus mitigating the negative impact due to volume change, so that the cycle stability of battery can be further improved. In addition, the above preparation method of the present disclosure is simple, has cost-effectiveness, and can achieve industrialization.

In a preferred embodiment, the step S1 includes: ball milling and mixing the ferro-silicon alloy and a ball milling medium to obtain a first slurry containing the ferro-silicon alloy core layer. According to the present disclosure, the ferro-silicon alloy and the ball milling medium are subjected to ball milling and mixing treatment, which can reduce the internal stress of the material and mitigate the phenomenon of expansion and pulverization caused by excessive particle size. Preferably, tungsten carbide milling balls are used for ball milling and more preferably the particle size of the tungsten carbide milling balls is 2 mm to 6 mm. More preferably, the ball to powder ratio during the ball milling process is 16-20:1. More preferably, the ball milling medium is anhydrous ethanol and/or water. Further, the raw materials in the ball milling process also comprise a dispersant, which is selected from one or more of citric acid, sodium tripolyphosphate, or sodium metasilicate.

In a preferred embodiment, step S2 includes: step S21, mixing the first slurry and the carbon source under stirring to obtain a second slurry; step S22, drying the second slurry and then subjecting same to a first heat treatment in an inert gas atmosphere to obtain a first heat treatment product; step S23, mixing the first heat treatment product with an oxide, and then performing a second heat treatment in an inert gas atmosphere to obtain the silicon-based composite; wherein, the carbon source comprises a first carbon source and a second carbon source; the thermal decomposition temperature of the first carbon source is less than that of the second carbon source; the treatment temperature of the first heat treatment is greater than or equal to the thermal decomposition temperature of the first carbon source; the treatment temperature of the second heat treatment is greater than or equal to the thermal decomposition temperature of the second carbon source, and the treatment temperature of the second heat treatment is greater than or equal to the melting point of the oxide.

In the present disclosure, two carbon sources with different decomposition temperatures are firstly added to the above ferro-silicon alloy core layer for stirring and mixing, the materials are evenly mixed so as to improve the subsequent coating effect. Subsequently, the first heat treatment is firstly performed at a lower treatment temperature in an inert gas atmosphere. At this point, the carbon source with a lower thermal decomposition temperature begins to decompose to form a uniform amorphous carbon coating layer on the surface of the core layer. Next, an oxide is added and the second heat treatment is performed at a higher treatment temperature. At this point, the carbon source with a higher decomposition temperature in the first heat treatment begins to decompose, and release gas that passes through the melted liquid oxide and forms air pores on its surface. After cooling to room temperature, the silicon-based composite with the above structure is obtained. Preferably, the difference between the thermal decomposition temperature of the second carbon source and the thermal decomposition temperature of the first carbon source is between 450°C and 550°C.

The material prepared therefrom has three beneficial effects: firstly, the present disclosure uses ferro-silicon material as the core layer, and the internal FeSiₓ phase inner core can provide a buffer matrix to alleviate the volume change of silicon. Secondly, using carbon material as the first coating layer can enhance the conductivity of the material, maintain the structural stability, forming a conductive contact. Thirdly, an oxide is used as the second coating layer, and the second coating layer has a through-hole structure, which can improve the structural stability of the material and at the same time further provide a transport channel for the intercalation and de-intercalation of lithium ions. Based on the synergistic effect of the above-mentioned triple modification, the silicon-based composite of the present disclosure can simultaneously balance excellent electrochemical performance and cycle stability.

In order to further improve the capacity and cycle retention rate of the battery, in a preferred embodiment, the first carbon source is one or more of asphalt, carboxymethyl cellulose, glucose, polyethylene glycol, or potato starch. Preferably, the second carbon source is one or more of phenolic resin, polyimide resin, or bismaleimide resin, further preferably phenolic resin and/or polyimide. Preferably, in the carbon source, the weight ratio of the first carbon source to the second carbon source is 4-8:1 (for example 4:1, 5:1, 6:1, 7:1 or 8:1).

In order to further balance the electrochemical performance and cycle stability of the battery, preferably the dosage of the carbon source is 30% to 45% by weight of the ferro-silicon alloy, for example 30%, 40%, 43%, or 45%. When the dosage of carbon source is below this range, it will lead to poor coating effect, decreased conductivity of material, and reduced specific capacity and rate performance of the battery. When the dosage of carbon source is above this range, it will lead to a decrease in the proportion of active substances, resulting in a decrease in the specific capacity of the battery. More preferably, the oxide is in powdery form, with an average particle size of 50 nm to 500 nm (more preferably 50 nm to 100 nm, for example 50 nm, 60 nm, 70 nm, 80 nm, 90 nm or 100 nm); and the dosage of the oxide is 30% to 80% by weight of the carbon source, for example 30%, 33%, 55% or 80%. When the dosage of oxide is below this range, it will lead to a weakened buffering effect of the second coating layer, thereby reducing the cycle performance of the battery. When the dosage of oxide is above this range, it will lead to a decrease in the proportion of active substances, and resulting in a decrease in the specific capacity of the battery.

In order to further improve the uniformity of the above excellent properties of the material, in a preferred embodiment, in step S21, the stirring is carried out under vacuum conditions at a stirring speed of 800 r/min to 2000 r/min. Preferably, the treatment time of the first heat treatment is 1 h to 6 h, more preferably 1 h to 3 h; and the treatment time of the second heat treatment is 1 h to 9 h, more preferably 5 h to 9 h.

In some preferred embodiments, when the first carbon source is asphalt and the oxide is diboron trioxide, the treatment temperature of the first heat treatment is 350°C to 450°C, more preferably 400°C to 450°C, and the treatment temperature of the second heat treatment is 800°C to 900°C, more preferably 850°C to 900°C; or, when the first carbon source is glucose and the oxide is phosphorus pentoxide, the treatment temperature of the first heat treatment is 250°C to 500°C, and the treatment temperature of the second heat treatment is 600°C to 1000°C; or, when the first carbon source is carboxymethyl cellulose and the oxide is vanadium pentoxide, the treatment temperature of the first heat treatment is 200°C to 300°C, and the treatment temperature of the second heat treatment is 600°C to 900°C. In these embodiments, the second carbon sources are each independently selected from one or more of phenolic resin, polyimide resin, or bismaleimide resin.

The present disclosure also provides an anode material, which comprises the aforementioned silicon-based composite or the silicon-based composite prepared by the aforementioned preparation method. In view of the above reasons, the structural stability of this anode material is superior.

The present disclosure also provides a lithium ion battery, which has the aforementioned anode material. In view of the above reasons, the lithium ion battery has better capacity and cycle retention rate.

The present application will be further described in detail below in combination with specific examples, which cannot be understood as limiting the scope of protection claimed in the present application.

### Example 1

70 g of ferro-silicon alloy powder (the content of iron in the ferro-silicon alloy was 15 wt%) was weighed, and 500 mL of anhydrous ethanol was added as the ball milling medium at a ball to powder ratio of 18:1, which was subjected to ball milling at 500 r/min for 6 h to obtain a first slurry containing the ferro-silicon alloy core layer with a particle size of 1.6 µm.

Then, 30 g of carbon source was added to the above first slurry. Among them, the carbon source was a powder mixture of asphalt and phenolic resin, and the two carbon sources were configured at a weight ratio of asphalt to phenolic resin of 8:1, which was stirred under vacuum at a stirring speed of 1,000 r/min for 1 h to obtain a second slurry.

After the second slurry obtained above was suction filtered and dried in a vacuum drying oven for 12 h, it was placed in a box furnace and subjected to the first heat treatment in an argon atmosphere, during which the temperature was raised to 450°C at a heating rate of 5°C/min and holding for 2 h, and then cooled down to room temperature in the furnace to obtain the first heat treatment product.

Subsequently, 10 g of B₂O₃ (with an average particle size of 80 nm) was added to the first heat treatment product, which were mixed evenly and then returned to the furnace for the second heat treatment in an argon atmosphere, during which the temperature was raised to 900°C at a heating rate of 5°C/min and holding for 6 h to obtain the silicon-based composite.

Among them, the radial width of the through-hole was 55 nm, the porosity of the second coating layer was 12%, and the specific surface area of the second coating layer was 0.9 m²/g. The thickness of the first coating layer was 80 nm, and the thickness of the second coating layer was 75 nm.

### Example 2

The difference between Example 2 and Example 1 only lied in that the carbon source was a powder mixture of asphalt and polyimide, and the two carbon sources were configured at a weight ratio of asphalt to polyimide of 8:1.

Among them, the radial width of the through-hole was 60 nm, the porosity of the second coating layer was 12%, and the specific surface area of the second coating layer was 1.1 m²/g. The thickness of the first coating layer was 79 nm, and the thickness of the second coating layer was 78 nm.

### Example 3

The difference between Example 3 and Example 1 only lied in that the carbon source was a powder mixture of asphalt and bismaleimide, and the two carbon sources were configured at a weight ratio of asphalt to bismaleimide of 8:1.

Among them, the radial width of the through-hole was 120 nm, the porosity of the second coating layer was 15%, and the specific surface area of the second coating layer was 1.5m²/g. The thickness of the first coating layer was 77 nm, and the thickness of the second coating layer was 77 nm.

### Example 4

The difference between Example 4 and Example 2 only lied in that the two carbon sources were configured at a weight ratio of asphalt to polyimide of 6:1.

Among them, the radial width of the through-hole was 110 nm, the porosity of the second coating layer was 18%, and the specific surface area of the second coating layer was 1.8m²/g. The thickness of the first coating layer was 60 nm, and the thickness of the second coating layer was 79 nm.

### Example 5

The difference between Example 5 and Example 2 only lied in that the two carbon sources were configured at a weight ratio of asphalt to polyimide of 4:1.

Among them, the radial width of the through-hole was 115 nm, the porosity of the second coating layer was 20%, and the specific surface area of the second coating layer was 2.0m²/g. The thickness of the first coating layer was 50 nm, and the thickness of the second coating layer was 80 nm.

### Example 6

The difference between Example 6 and Example 2 only lied in that the addition amount of B₂O₃ was 5 g.

Among them, the radial width of the through-hole was 60 nm, the porosity of the second coating layer was 12%, and the specific surface area of the second coating layer was 1.2m²/g. The thickness of the first coating layer was 80 nm, and the thickness of the second coating layer was 39 nm.

### Example 7

The difference between Example 7 and Example 2 only lied in that the treatment temperature of the first heat treatment was 300°C.

Among them, the radial width of the through-hole was 59 nm, the porosity of the second coating layer was 5%, and the specific surface area of the second coating layer was 2.0m²/g. The thickness of the first coating layer was 79 nm, and the thickness of the second coating layer was 38 nm.

### Example 8

The difference between Example 8 and Example 2 only lied in that the treatment temperature of the second heat treatment was 700°C.

Among them, the radial width of the through-hole was 58 nm, the porosity of the second coating layer was 8%, and the specific surface area of the second coating layer was 0.8m²/g. The thickness of the first coating layer was 70 nm, and the thickness of the second coating layer was 31 nm.

### Example 9

The difference between Example 9 and Example 2 only lied in that the dosage of carbon source was 14 g.

Among them, the radial width of the through-hole was 50 nm, the porosity of the second coating layer was 12%, and the specific surface area of the second coating layer was 1.0m²/g. The thickness of the first coating layer was 30 nm, and the thickness of the second coating layer was 76 nm.

### Example 10

The difference between Example 10 and Example 2 only lied in that the dosage of carbon source was 21 g.

Among them, the radial width of the through-hole was 51 nm, the porosity of the second coating layer was 12%, and the specific surface area of the second coating layer was 1.1 m²/g. The thickness of the first coating layer was 50 nm, and the thickness of the second coating layer was 75 nm.

### Example 11

The difference between Example 11 and Example 2 only lied in that the addition amount of B₂O₃ was 24 g.

Among them, the radial width of the through-hole was 46 nm, the porosity of the second coating layer was 10%, and the specific surface area of the second coating layer was 0.9m²/g. The thickness of the first coating layer was 80 nm, and the thickness of the second coating layer was 100 nm.

### Example 12

The difference between Example 12 and Example 2 only lied in that the addition amount of B₂O₃ was 16.5 g.

Among them, the radial width of the through-hole was 110 nm, the porosity of the second coating layer was 15%, and the specific surface area of the second coating layer was 1.3m²/g. The thickness of the first coating layer was 80 nm, and the thickness of the second coating layer was 80 nm.

### Example 13

The difference between Example 13 and Example 2 lied in that the first carbon source was carboxymethyl cellulose and the oxide was vanadium pentoxide. The treatment temperature of the first heat treatment was 300°C, and the treatment temperature of the second heat treatment was 900°C.

Among them, the radial width of the through-hole was 105 nm, the porosity of the second coating layer was 13%, and the specific surface area of the second coating layer was 1.3m²/g. The thickness of the first coating layer was 65 nm, and the thickness of the second coating layer was 76 nm.

### Example 14

The difference between Example 14 and Example 2 lied in that the first carbon source is glucose and the oxide is phosphorus pentoxide. The treatment temperature of the first heat treatment was 500°C, and the treatment temperature of the second heat treatment was 1000°C.

Among them, the radial width of the through-hole was 100 nm, the porosity of the second coating layer was 6%, and the specific surface area of the second coating layer was 0.8m²/g. The thickness of the first coating layer was 50 nm, and the thickness of the second coating layer was 78 nm.

### Example 15

The difference between Example 15 and Example 2 only lied in that the two carbon sources were configured at a weight ratio of asphalt to polyimide of 10:1.

Among them, the radial width of the through-hole was 89 nm, the porosity of the second coating layer was 4%, and the specific surface area of the second coating layer was 0.4m²/g. The thickness of the first coating layer was 76 nm, and the thickness of the second coating layer was 78 nm.

### Example 16

The difference between Example 16 and Example 2 only lied in that the carbon source was only asphalt.

### Comparative example 1

The difference between Comparative example 1 and Example 2 only lied in that no B₂O₃ was added for the second heat treatment.

### Comparative example 2

The difference between Comparative example 2 and Example 2 only lied in that no carbon source or boron oxide was added for sintered coating, only the ball milled ferro-silicon alloy core layer was used.

### Performance testing:

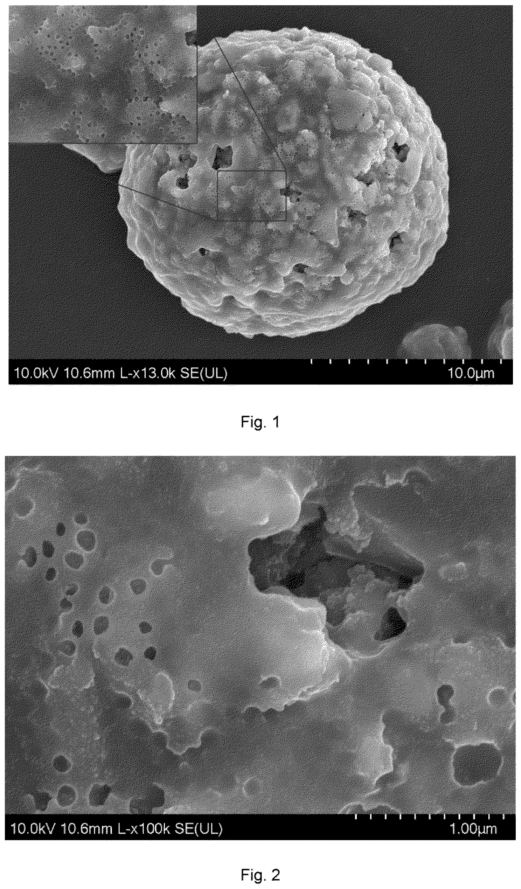

The product obtained in Example 2 was detected by SEM, and the results are shown in Figures 1 and 2. From the figures, it can be seen that the silicon-based composite includes a ferro-silicon alloy core layer, a first coating layer coated on the outer surface of the ferro-silicon alloy core layer; and a second coating layer coated on the outer surface of the first coating layer away from the ferro-silicon alloy core layer, wherein the second coating layer is provided with a plurality of through-holes. The reason for the formation of this pore structure is that during the first heat treatment, asphalt begins to pyrolyze to form amorphous carbon, which coats the ferro-silicon alloy core layer. However, due to its high-temperature resistance, polyimide does not undergo significant decomposition at this temperature, in the second heat treatment, when the temperature is heated to around 650°C, boron oxide begins to liquefy into a highly viscous liquid, and polyimide also begins to decompose in large quantities at this temperature, producing gas overflow, and many air pores are formed on boron oxide until it decomposes completely, and then the structure of the porous boron oxide shell is formed after the temperature is reduced.

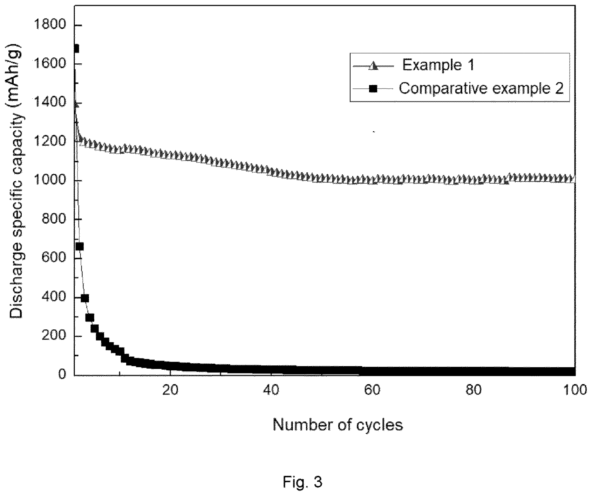

The anode materials prepared in the Examples and Comparative examples were made into 2032 button batteries, respectively to test the electrochemical performances of the materials. The current density of all batteries was 100 mA/g, and the voltage range was 0.01 V to 1.5 V. Figure 3 shows a comparison diagram of the discharge cycle curves of batteries between Example 1 and Comparative example 2 of the present disclosure. The specific test results for the Examples and Comparative examples in the present application are shown in Table 1 below:

**Table 1**

| | Initial discharge specific capacity (mAh/g) | Initial charge-discharge efficiency (%) | Capacity retention rate (relative to the second cycle)% |
|---|---|---|---|
| Example 1 | 1402.3 | 86.3 | 82.6/100 cycles |
| Example 2 | 1475.4 | 85.9 | 83.4/100 cycles |
| Example 3 | 1426.5 | 84.6 | 80.4/100 cycles |
| Example 4 | 1488.6 | 84.1 | 85.6/100 cycles |
| Example 5 | 1456.4 | 83.7 | 83.6/100 cycles |
| Example 6 | 1521.7 | 85.1 | 75.5/100 cycles |
| Example 7 | 1426.5 | 84.1 | 72.3/100 cycles |
| Example 8 | 1410.9 | 83.2 | 71.6/100 cycles |
| Example 9 | 1386.7 | 82.0 | 70.4/100 cycles |
| Example 10 | 1421.3 | 84.9 | 78.6/100 cycles |
| Example 11 | 1405.3 | 81.0 | 86.4/100 cycles |
| Example 12 | 1412.3 | 84.6 | 82.1/100 cycles |
| Example 13 | 1401.4 | 83.1 | 80.4/100 cycles |
| Example 14 | 1400.8 | 82.6 | 80.1/100 cycles |
| Example 15 | 1395.6 | 82.4 | 80.3/100 cycles |
| Example 16 | 1052.6 | 83.4 | 86.4/100 cycles |
| Comparative example 1 | 1502.9 | 86.5 | 66.3/100 cycles |
| Comparative example 2 | 1683.4 | 75.3 | 15.1/20 cycles |

From the Comparative example 1 and Example 2, it can be found that the arrangement of the above second coating layer in this application can significantly improve the cyclic stability of the product on the basis of making the product have excellent charge-discharge specific capacity and charge-discharge efficiency.

From the Comparative example 2 and Example 2, it can be found that the silicon-based composite based on the above specific structure has significantly improved cycle stability on the basis of excellent charge-discharge specific capacity and charge-discharge efficiency compared to conventional ferro-silicon materials.

From Example 16 and Example 2, it can be found that the arrangement of a plurality of through-holes in the second coating layer can enable the product to exhibit better cycle stability, as well as excellent charge-discharge specific capacity and charge-discharge efficiency compared to the second coating layer without a through-hole structure, and thus allowing the product to take into account the better cycle stability, charge-discharge specific capacity and charge-discharge efficiency simultaneously.

From Examples 2, 4, 5, and 15, it can be further found that the weight ratio of the first carbon source to the second carbon source is preferably 4-8:1. By controlling the weight ratio of the first carbon source to the second carbon source within this range, the product can take into account the better cycle stability, charge-discharge specific capacity and charge-discharge efficiency simultaneously. When the weight ratio of the first carbon source to the second carbon source is not within this range (such as in Example 15), the porosity of the product material is poor, and the charge-discharge specific capacity of the battery will be relatively low.

From Examples 2, 6, 11, and 12, it can be further found that the dosage of the oxide is preferably 30% to 80% by weight of the carbon source. When the dosage of oxide is not within this range (such as Example 6), the cycle stability of the product is poor.

From Examples 2, 7, and 8, it can be further found that when the first carbon source is asphalt and the oxide is diboron trioxide, preferably the treatment temperature of the first heat treatment is preferably 350°C to 450°C, and the treatment temperature of the second heat treatment is 800°C to 900°C. When the heat treatment temperature is not within this range (such as Example 7 and Example 8), the cycle stability of the product is poor.

From Examples 2, 9, and 10, it can be further found that the dosage of the carbon source is preferably 30% to 45% by weight of the ferro-silicon alloy layer. When the amount of carbon source is not within this range (such as Example 9), the cycle stability of the product is poor.

The above contents only describe the preferred examples of the present disclosure, and are not intended to limit the present disclosure. For those skilled in the art, various modifications and changes can be made to the present disclosure. Any modifications, equivalent substitutions, improvements, and the like made within the spirit and principle of the present disclosure shall be included within the scope of protection of the present disclosure.

## Claims

1. A silicon-based composite, wherein the silicon-based composite comprises:
a ferro-silicon alloy core layer;
a first coating layer coated on the outer surface of the ferro-silicon alloy core layer; and
and a second coating layer coated on the outer surface of the first coating layer away from the ferro-silicon alloy core layer;
wherein the material of the first coating layer comprises carbon and the material of the second coating layer comprises an oxide.

2. The silicon-based composite according to claim 1, wherein the second coating layer is provided with a plurality of through-holes;
preferably, the radial width of the through-hole is 50 nm to 800 nm, more preferably 50 nm to 150 nm;
preferably, the porosity of the second coating layer is 5% to 20%; and
preferably, the specific surface area of the second coating layer is 0.5 m²/g to 2 m²/g.

3. The silicon-based composite according to claim 1 or 2,wherein the oxide is selected from one or more of diboron trioxide, phosphorus pentoxide, arsenic trioxide, or vanadium pentoxide.

4. The silicon-based composite according to claim 3, wherein the ferro-silicon alloy core layer is in powdery form, and preferably the average particle size of the ferro-silicon alloy core layer is 0.5 µm to 2.5 µm;
preferably, the weight content of the iron element in the ferro-silicon alloy core layer is 5 wt% to 15 wt%;
preferably, the thickness of the first coating layer is 50 nm to 150 nm, more preferably 50 nm to 80 nm; and
preferably, the thickness of the second coating layer is 10 nm to 100 nm, more preferably 50 nm to 80 nm.

5. A preparation method of the silicon-based composite according to any one of claims 1 to 4, wherein the preparation method comprises the steps of:
step S1, providing a ferro-silicon alloy core layer; and
step S2, coating a first coating layer on the outer surface of the ferro-silicon alloy core layer, and coating a second coating layer on the outer surface of the first coating layer away from the ferro-silicon alloy core layer, thereby forming the silicon-based composite.

6. The preparation method according to claim 5, wherein the step S1 comprises: ball milling and mixing a ferro-silicon alloy and a ball milling medium to obtain a first slurry containing the ferro-silicon alloy core layer;
preferably, the ball to powder ratio during the ball milling process is 16-20:1;
preferably, the raw materials in the ball milling process also comprise a dispersant, more preferably the dispersant is selected from one or more of citric acid, sodium tripolyphosphate, or sodium metasilicate; and
preferably, the ball milling medium is anhydrous ethanol and/or water.

7. The preparation method according to claim 6, wherein the step S2 comprises:
step S21, mixing the first slurry and the carbon source under stirring to obtain a second slurry;
step S22, drying the second slurry and then subjecting the second slurry to a first heat treatment in an inert gas atmosphere to obtain a first heat treatment product;
step S23, mixing the first heat treatment product with an oxide, and then performing a second heat treatment in an inert gas atmosphere to obtain the silicon-based composite;
wherein, the carbon source comprises a first carbon source and a second carbon source;
the thermal decomposition temperature of the first carbon source is less than the thermal decomposition temperature of the second carbon source;
the treatment temperature of the first heat treatment is greater than or equal to the thermal decomposition temperature of the first carbon source;
the treatment temperature of the second heat treatment is greater than or equal to the thermal decomposition temperature of the second carbon source, and the treatment temperature of the second heat treatment is greater than or equal to the melting point of the oxide; and
preferably, the difference between the thermal decomposition temperature of the second carbon source and the thermal decomposition temperature of the first carbon source is between 450°C and 550°C.

8. The preparation method according to claim 7, wherein the first carbon source is one or more of asphalt, carboxymethyl cellulose, glucose, polyethylene glycol, or potato starch;
preferably, the second carbon source is one or more of phenolic resin, polyimide resin, or bismaleimide resin;
preferably, in the carbon source, the weight ratio of the first carbon source to the second carbon source is 4-8:1;
preferably, the dosage of the carbon source is 30% to 45% by weight of the ferro-silicon alloy layer; preferably, the oxide is in powdery form, and the average particle size of the oxide is 50 nm to 500 mm, more preferably 50 nm to 100 nm;
preferably, the dosage of the oxide is 30% to 80% by weight of the carbon source;
preferably, the stirring is carried out under vacuum conditions at a stirring speed of 800 r/min to 2000 r/min;
preferably, the treatment time of the first heat treatment is 1 h to 6 h; and
preferably, the treatment time of the second heat treatment is 1 h to 9 h.

9. The preparation method according to claim 8, wherein when the first carbon source is asphalt and the oxide is diboron trioxide, the treatment temperature of the first heat treatment is 350°C to 450°C, and the treatment temperature of the second heat treatment is 800°C to 900°C; or
when the first carbon source is glucose and the oxide is phosphorus pentoxide, the treatment temperature of the first heat treatment is 250°C to 500°C, and the treatment temperature of the second heat treatment is 600°C to 1000°C; or
when the first carbon source is carboxymethyl cellulose and the oxide is vanadium pentoxide, the treatment temperature of the first heat treatment is 200°C to 300°C, and the treatment temperature of the second heat treatment is 600°C to 900°C.
10. An anode material, wherein the anode material comprises the silicon-based composite of any one of claims 1 to 4 or the silicon-based composite obtained by the preparation method of any one of claims 5 to 9.
11. A lithium ion battery, wherein the lithium ion battery has the anode material of claim 10.
